# EUROPÄISCHE PATENTANMELDUNG

(11) **EP 4 722 168 A1**
(43) Veröffentlichungstag der Anmeldung: **08.04.2026**
(21) Anmeldenummer: 24203893.3
(22) Anmeldetag: 01.10.2024
(51) Int. Cl.: C02F 1/52, C02F 103/28, D21C 11/00, C02F 11/06, C02F 11/127

(54) **VERFAHREN ZUM ABTRENNEN VON LIGNOSULFONAT**

(71) Anmelder: AustroCel Hallein GmbH, 5400 Hallein (AT)
(72) Erfinder: Schmid, Maximilian, 5412 Puch (AT); Horner, Felix, 5400 Hallein (AT)
(74) Vertreter: Kalkoff & Partner Patentanwälte mbB

(57) **Zusammenfassung**

Die Erfindung betrifft ein Verfahren zum Abtrennen von Lignosulfonat (LS) aus Abwasser. Um die refraktäre CSB-Fracht des Abwassers zu verringern, wird für ein alkalisches Wasser (F), aufweisend einen pH-Wert von 8 bis 14 ein Verfahren mit den Schritten:
- Zugabe einer Magnesium-Verbindung, die in dem alkalischen Abwasser (F) in situ Magnesiumhydroxid bildet, oder einer wässrigen, chlorfreien Magnesiumhydroxid-Lösung
- Bilden eines Lignosulfonat-Produkts (P) durch Umsetzung mit Magnesiumhydroxid,
- Abtrennen von Lignosulfonat-Produkt (P) und alkalischem Abwasser (F) durchgeführt.

## Beschreibung

Die Erfindung betrifft ein Verfahren zum Abtrennen von Lignosulfonat von Abwasser.

Biologisch schwer abbaubarer, sogenannter refraktärer chemischer Sauerstoffbedarf (CSB) kann in biologischen Kläranlagen kaum abgebaut werden, was das Einhalten gegebener Grenzwerte erschwert. Zur refraktären, d. h., nicht-abbaubaren CSB-Fracht zählt auch Lignosulfonat, meist Ammonium-, Natrium-, Calcium- oder Magnesium-Lignosulfonat. Lignosulfonat wird im Zuge der Herstellung von Zellstoff aus Lignin gebildet, welches neben Cellulose und Hemicellulosen eine natürliche Komponente des Holzes darstellt. Lignosulfonat wird z. B. eingesetzt im Zusammenhang mit der Förderung von Rohöl sowie in der Bauindustrie bzw. zur Bodenverbesserung. Zur Reduktion des Anteils refraktärer CSB-Fracht im Abwasser wurde der Vorschlag gemacht, dem Lignosulfonat-haltigen Abwasser zuerst Lauge und dann Magnesiumchlorid zuzusetzen, um das Lignosulfonat auszufällen (LanlanYe et al., Rapid and effective removal of sodium lignosulfonate from aqueous solutions by in-situ formed magnesium hydroxide; Korean J. Chem. Eng. 33 (12), 3541-3549 (2016)). Diese Versuche wurden mit aufgereinigtem, pulverförmigen Natrium-Lignosulfonat (SLSN) in wässriger Lösung durchgeführt. Zusätzliches Chlor bzw. Chlorionen sind im Abwasser jedoch unerwünscht.

Die vorliegende Erfindung befasst sich mit dem Entfernen von Lignosulfonat, insbesondere Natrium-Lignosulfonat, aus alkalischem Abwasser, wie es z. B. bei der Zellstoffherstellung und -bleiche anfällt. Die Hauptmenge an Lignosulfonat wird während des Zellstoffaufschlusses, z. B. eines Magnesium-Bisulfit-Aufschlusses, oder anderer, meist saurer Aufschlussverfahren gelöst. Das Abwasser des Aufschlusses wird vollständig erfasst, eingedampft und verbrannt, zum einen zur Kreislaufschließung und Rückgewinnung der Aufschluss-Chemikalien und zum anderen zur Energiegewinnung. Der ungebleichte Zellstoff enthält nach dem Aufschluss jedoch noch Lignosulfonat, das in der Regel in einer alkalischen Extraktion unter Zusatz von Sauerstoff und/oder Peroxid (EOP-Stufe) weitgehend aus dem Zellstoff gelöst wird. Das Abwasser dieser EOP-Stufe enthält daher eine hohe Konzentration an Lignosulfonat, welches als CSB-Fracht erfasst wird. Diese Fracht weist einen hohen Anteil an einer refraktären, d. h., nicht-abbaubaren CSB-Fracht auf. Es stellt sich die Aufgabe, ein Verfahren zum Reduzieren des chemischen Sauerstoffbedarfs für alkalische Abwässer bereitzustellen, das ohne den Zusatz von Chlor-Ionen auskommt.

Diese Aufgabe wird gelöst mit einem Verfahren nach Anspruch 1.

Erfindungsgemäß wird ein Verfahren zum Abtrennen von Lignosulfonat aus alkalischem Abwasser mit einem pH-Wert von 8 bis 14 vorgeschlagen mit den Schritten:
- Zugabe einer chlorfreien Magnesium-Verbindung, die in dem alkalischen Abwasser in situ Magnesiumhydroxid bildet oder einer wässrigen, chlor freien Lösung enthaltend Magnesiumhydroxid,
- Bilden eines Lignosulfonat-Produkts durch Umsetzung mit Magnesiumhydroxid,
- Trennen von Lignosulfonat-Produkt und alkalischem Abwasser.

Die Magnesium-Verbindung, die zugesetzt wird, ist erfindungsgemäß frei von Chlor bzw. Chlorionen. Typisch werden Magnesiumoxid oder, bevorzugt, eine wasserlösliche Magnesium-Verbindung zugesetzt, beispielsweise ein chlorfreies Magnesium-Salz, z. B. Magnesiumsulfit oder Magnesiumbisulfit oder eine organische Magnesiumverbindung, z. B. als Magnesiumacetat. Die Magnesium-Verbindung kann als Feststoff oder in flüssiger Form zugesetzt werden.

Alternativ kann eine wässrige Lösung von Magnesiumhydroxid dem alkalischen Abwasser zugesetzt werden.

Das alkalische Abwasser, z. B. das Abwasser einer EOP-Stufe der Zellstoffherstellung, weist einen alkalischen pH-Wert auf, der meist über einem pH-Wert von mindestens 8, typisch zwischen einem pH von 9,5 bis 12 liegt. Der pH-Wert des Abwassers beträgt maximal pH 14. Die Erfinder haben erkannt, dass dieses Abwasser damit gute Voraussetzungen für ein Abtrennen des Lignosulfonats bietet. Falls erforderlich, wird der pH-Wert des alkalischen Abwassers durch Zugabe von Natriumhydroxid (NaOH) oder Calciumhydroxid (Ca(OH)2) eingestellt, z. B. auf einen Wert von pH 10,5 bis pH 12, bevorzugt von 11,0 bis 12,0. Das Einstellen bzw. das konstante Halten des pH-Werts bei einem Wert von pH 8 oder höher ist auch während und nach der Reaktion von Lignosulfonat und Magnesiumhydroxid vorteilhaft, da die Magnesium-Verbindung häufig als saure, wässrige Lösung zugegeben wird, die den pH-Wert absenkt. Entsprechend ist es bevorzugt, den pH-Wert des alkalischen Abwassers in Abstimmung auf die zuzusetzende Magnesium-Verbindung entweder zu Beginn des Verfahrens ausreichend hoch einzustellen oder durch Zugabe von beispielsweise NaOH oder Ca(OH)₂ während der Reaktion über einem minimalen pH-Wert von mindestens pH 8, vorteilhaft mindestens pH 9,5, zu halten.

Das Abtrennen des Lignosulfonats erfolgt, indem eine chlorfreie Magnesium-Verbindung, die in dem alkalischen Abwasser in situ Magnesiumhydroxid bildet, dem Abwasser zugesetzt wird. Die Bindung zwischen dem in situ gebildeten Magnesiumhydroxid und dem Lignosulfonat erfolgt ohne Weiteres in weniger als 15 Minuten, vorteilhaft in weniger als 5 Minuten. Eine Prozesstemperatur von 10 °C bis 90 °C ist der Reaktion förderlich. Nach dem Abtrennen des Lignosulfonat-Produkts von dem alkalischen Abwasser sind mindestens 25%, vorteilhaft mindestens 50%, bevorzugt mindestens 90% der refraktären CSB-Fracht des alkalischen Abwassers entfernt. Diese Reduktion der refraktären, also nicht biologisch abbaubaren CSB-Fracht ist vorteilhaft, weil refraktäre CSB-Anteile im Abwasser zwar nur sehr langsam im Vorfluter abgebaut werden, weshalb sie in Fließgewässern kaum mehr zu unmittelbarer Sauerstoffzehrung führen. Sie sind also langfristig biologisch abbaubar; das mindestens teilweise Abtrennen der refraktären CSB-Fracht eröffnet jedoch verschiedene Handlungsmöglichkeiten. Wird weniger refraktäre CSB-Fracht in den Vorfluter gegeben und wird die CSB-Fracht zur Energiegewinnung eingesetzt, so ist dies doppelt vorteilhaft. Ergänzend eröffnet es die Möglichkeit, andere Zellstoffsorten herzustellen sowie die Produktionsmengen bei gleichbleibender CSB-Fracht zu erhöhen.

Nach einer einfachen Ausführung des erfindungsgemäßen Verfahrens wird Magnesiumoxid als Feststoff, bevorzugt pulverförmig zugesetzt. Die Partikelgröße des Magnesiumoxids liegt vorteilhaft zwischen 1 µm und 500 µm. Das Magnesiumoxid wird im alkalischen Abwasser in situ zu Magnesiumhydroxid umgesetzt, welches Lignosulfonat zu einem Lignosulfonat-Produkt bindet, das dann aus dem Abwasser ausfällt und abgetrennt werden kann. Nachteilig am Einsatz von Magnesiumoxid ist, dass lediglich die Oberfläche der Magnesiumoxid-Partikel zu Magnesiumhydroxid (Mg(OH)₂) umgesetzt wird. So sind hohe Mengen von Magnesiumoxid (MgO) erforderlich, um das Lignosulfonat auszufällen. Typisch werden mindestens 1 kg MgO/m³ Abwasser bis 10 kg MgO/m³ Abwasser, bevorzugt 3 kg MgO/m³ Abwasser bis 8 kg MgO/m³ Abwasser eingesetzt, um das darin enthaltene Lignosulfonat möglichst vollständig auszufällen. Da Magnesiumoxid als Feststoff eingesetzt wird, ist es empfehlenswert, das Magnesiumoxid möglichst gut im Abwasser zu verteilen, beispielsweise durch dynamisches oder statisches Homogenisieren.

Bevorzugt wird, zur Durchführung des erfindungsgemäßen Verfahrens eine wasserlösliche Magnesium-Verbindung, insbesondere ein wasserlösliches Magnesiumsalz einzusetzen. Wie nachstehend noch näher erläutert wird, sind Magnesiumacetat und Magnesiumsulfit bzw. Magnesiumbisulfit besonders bevorzugt eingesetzte Salze. Gleichfalls vorteilhaft ist der Einsatz einer wässrigen Magnesiumhydroxid-Lösung. Da die Salze in gelöster Form eingesetzt werden, genügt, ebenso wie beim unmittelbaren Einsatz von Magnesiumhydroxid, eine geringe Einsatzmenge von bis zu 1 kg/m³ bezogen auf das alkalische Abwasser, vorteilhaft von 50 g/m³ bis 700 g/m³, bevorzugt von 100 g/m³ bis 500 g/m³, um genügend Magnesiumhydroxid in situ zu erzeugen, so dass das im Abwasser enthaltene refraktäre Lignosulfonat möglichst vollständig mit dem Magnesiumhydroxid zu einem Lignosulfonat-Produkt gebunden und anschließend aus dem Abwasser ausgefällt bzw. abgetrennt werden kann.

Es hat sich überraschend herausgestellt, dass das Lignosulfonat besonders vollständig und schnell aus dem Abwasser ausgefällt werden kann, wenn neben der Magnesiumverbindung zusätzlich auch eine chlorfreie Ammonium-, Natrium-, Kalium- oder Calciumverbindung, die bevorzugt wasserlöslich ist, zugesetzt wird. Besonders bevorzugt werden Salze oder Oxide der Ammonium-, Natrium-, Kalium- oder Calciumverbindung zugesetzt, z. B. Ammoniaklösung, als Natrium-, Kalium- oder Calciumhydroxid, Calciumoxid und/oder als ein Ammonium-, Natrium-, Kalium- und/oder Calciumsalz in Mischung mit der Magnesiumverbindung zugesetzt. Auch hier wird die Zugabe von chlorfreien Salzen, vorzugsweise eines wasserlöslichen Salzes einer im Rahmen der Zellstoffherstellung verfügbaren Säure, z. B. eines Sulfits, Bisulfits oder Acetats bevorzugt. Vorteilhaft werden auch Mischungen aus Ammonium-, Natrium-, Kalium- oder Calciumverbindungen eingesetzt. Vorteilhaft wird die wasserlösliche Ammonium-, Natrium-, Kalium- oder Calciumverbindung in einer Menge 0,01 kg/m³ bis 10 kg/m³, vorteilhaft von 0,1 kg/m³ bis 6 kg/m³, bevorzugt von 0,05 kg/m³ bis 0,3 kg/m³ bezogen auf zu behandelndes Abwasser eingesetzt. Vorteilhaft ist die eingesetzte Menge der Ammonium-, Natrium-, Kalium- und/oder Calciumverbindung geringer als die eingesetzte Menge der Magnesiumverbindung.

Das durch Zugabe einer chlorfreien Magnesiumverbindung, ggf. ergänzt durch eine chlorfreie Ammonium-, Natrium-, Kalium- oder Calciumverbindung im alkalischen Abwasser entstandene Produkt aus Magnesiumhydroxid und Lignosulfonat fällt aus dem Abwasser aus und wird vom Abwasser getrennt. Das Abtrennen von Lignosulfonat-Produkt und Abwasser kann auf beliebige Weise erfolgen. Technisch besonders einfach und auch kostengünstig kann das Abtrennen in einem Absetzbecken erfolgen. Es können aber auch eine Filtrationseinrichtung oder ein Dekanter oder eine Zentrifuge bzw. andere Trennverfahren, insbesondere Fest-/Flüssig-Trennverfahren eingesetzt werden. Die erforderliche Verweilzeit in einem Absetzbecken beträgt mindestens 30 Minuten bis maximal 5 Stunden, vorteilhaft zwischen 1 Stunde und 3 Stunden.

Es hat sich herausgestellt, dass das durch Ausfällen erhaltene Lignosulfonat-Produkt mit einem Feststoff-Gehalt von über 40%, meist von über 55% bezogen auf das Gesamtgewicht des ausgefällten Materials vorliegt. Die Erfinder haben herausgefunden, dass das im Produkt mit Magnesiumhydroxid gebundene Lignosulfonat unter Umständen noch Komponenten enthält, die gesondert verwertet werden können. Entsprechend wird das ausgefällte Lignosulfonat-Produkt nach einer vorteilhaften Ausführung des erfindungsgemäßen Verfahrens gewaschen, um lösliche, insbesondere wasserlösliche Verunreinigungen zu entfernen bzw. um Komponenten zu separieren. Dabei ist darauf zu achten, dass das Wasser, das zum Waschen des Lignosulfonat-Produktes eingesetzt wird, einen neutralen oder alkalischen pH-Wert aufweist, da das Lignosulfonat-Produkt in saurem wässrigen Milieu löslich ist.

Das Lignosulfonat-Produkt kann dann entweder industriell verwertet werden, z. B. als

Hilfsmittel bei Ölbohrungen. Alternativ kann das Lignosulfonat-Produkt aufgrund seines beträchtlichen Energiegehalts von 6.000 kJ/kg bis 17.000 kJ/kg (wasserfrei) als Brennstoff eingesetzt werden, um durch das Verbrennen Energie, insbesondere Prozessenergie, z. B. für einen Zellstoffaufschluss oder alternativ, wenn z. B. durch das Verbrennen des Lignosulfonat-Produktes ein Energieüberschuss erzeugt wird, zur Verstromung bereitzustellen. Ein besonderer Vorteil bei der Verbrennung ist, dass das zur Bindung des Lignosulfonats eingesetzte Magnesium während der Verbrennung oxidiert und erneut für das Ausfällen von Lignosulfonat aus alkalischem Abwasser einsetzbar ist. Das Verbrennen des Lignosulfonat-Produktes ermöglicht hier also eine weitgehende Kreislaufschließung für das Magnesiumoxid. Auch im Lignosulfonat-Produkt enthaltener Schwefel kann nach der Verbrennung aus dem Rückstand der Verbrennung zurückgewonnen und ggf. einer erneuten Nutzung, z. B. beim Aufschluss von Zellstoff, zugeführt werden.

Die vorstehend beschriebenen Verfahrensschritte können vielfältig dort eingesetzt werden, wo alkalische, lignosulfonathaltige Abwässer verfügbar sind. Bevorzugt eignet sich das Verfahren zum Ausfällen von Lignosulfonat aus alkalischem Abwasser jedoch im Rahmen der Zellstoffherstellung, insbesondere der Zellstoffbleiche. Bei einem Zellstoffaufschluss wird der größte Anteil des Lignins meist durch schwefelhaltige Verbindungen in wässriger Lösung aus dem Holzverband herausgelöst; Lignin und Cellulose bzw. Zellstoff werden voneinander getrennt. Die Kochlauge bzw. -säure wird mit den darin enthaltenen Lignosulfonat einer Eindampfung und anschließend einer Verbrennung zugeführt; das Verbrennen des Lignosulfonats stellt Prozessenergie bereit und ermöglicht die Rückgewinnung der Aufschlusschemikalien. Während des Aufschlusses wird das Lignin bzw. Lignosulfonat nicht vollständig aus dem Zellstoff entfernt. Der Abbau des Lignins bzw. das Herauslösen des Lignosulfonats aus dem Zellstoff wird in einer alkalischen Extraktionsstufe unter Zusatz von Sauerstoff und Peroxid (EOP-Stufe) vollendet. Das alkalische Abwasser der EOP-Stufe weist typisch einen pH-Wert von 9,5 bis 12 auf und enthält 1,5 kg/m³ bis 5 kg/m³ Lignosulfonat, bezogen auf das Abwasservolumen. Das Lignosulfonat kann auf einfache Weise mit dem erfindungsgemäßen Verfahren aus dem alkalischen Abwasser der EOP-Stufe unter Zusatz einer chlorfreien Magnesiumverbindung, die in wässriger, alkalischer Lösung in situ Magnesiumhydroxid bildet, oder durch Zusatz einer Magnesiumhydroxid-haltigen Lösung gefällt werden.

Die Erfinder haben herausgefunden, dass das erfindungsgemäße Verfahren im Zusammenhang mit der Zellstoffherstellung besonders effizient eingesetzt werden kann, weil hier eine Rückgewinnung der erfindungsgemäß eingesetzten, chlorfreien Magnesiumverbindung entwickelt wurde.

Bei der Verbrennung des durch Fällung gewonnenen Lignosulfonat-Produktes wird das Magnesiumhydroxid zu Magnesiumoxid oxidiert, das dann in den Verbrennungsrückständen des Lignosulfonat-Produktes enthalten ist.

Das Magnesiumoxid kann unmittelbar, ggf. nach Zerkleinerung, wieder zum Fällen von Lignosulfonat aus dem alkalischen Abwasser eingesetzt werden. Der Kreislauf, der so geschlossen werden kann, macht den Einsatz der chlorfreien Magnesiumverbindung, trotz der hohen Einsatzmengen wirtschaftlich.

Bevorzugt wird jedoch Magnesiumoxid, insbesondere das Verbrennungsprodukt aus der Verbrennung des Lignosulfonat-Produkts, das Magnesiumoxid enthält, in eine saure Flüssigkeit, insbesondere in eine saure wässrige Flüssigkeit eingeleitet, um ein Magnesiumsalz zu bilden, das dann mindestens teilweise in Lösung vorliegt. Im Rahmen der Zellstoffherstellung sind sowohl Kochsäure als auch Brüdenkondensat verfügbar, die schweflige Säure bzw. Essigsäure enthalten. Es hat sich als vorteilhaft erwiesen, einen Teilstrom dieser wässrigen, sauren Lösungen zu nutzen, um eine ausreichende Menge an in Wasser gelösten Magnesium- und optional Ammonium-, Natrium-, Kalium- und/oder Calciumsalzen bereitzustellen, die dann in das alkalische Abwasser der EOP-Stufe eingeleitet wird. Da die Salze in gelöster Form vorliegen, erfolgt für die Magnesiumverbindung eine weitgehende Umsetzung zu in situ gebildetem Magnesiumhydroxid. Entsprechend ist -insbesondere bei Kreislaufschließung- nur eine sehr geringe Menge an Magnesiumverbindung sowie optional an Ammonium-, Natrium-, Kalium- und/oder Calciumverbindung erforderlich, um eine maximale Menge an Lignosulfonat aus dem alkalischen Abwasser zu binden und abzutrennen.

Auch für diese Ausführung des erfindungsgemäßen Verfahrens erfolgt die Kreislaufschließung wie vorstehend beschrieben. Nach dem Ausfällen und ggf. Waschen des Lignosulfonats wird das Lignosulfonat mit einem Feststoffgehalt zwischen 40% und 70% bezogen auf die bei 105 °C bis zur Gewichtskonstanz getrocknete Masse verbrannt und das im Verbrennungsrückstand enthaltene Magnesiumoxid wird in einer sauren, wässrigen Lösung gelöst.

Details des erfindungsgemäßen Verfahrens werden in den nachfolgenden Ausführungsbeispielen näher erläutert. Es zeigen:
- Fig. 1: Zellstoffaufschluss und EOP-Stufe gemäß Stand der Technik
- Fig. 2: Zellstoffaufschluss und EOP-Stufe mit Fällung des Lignosulfonats

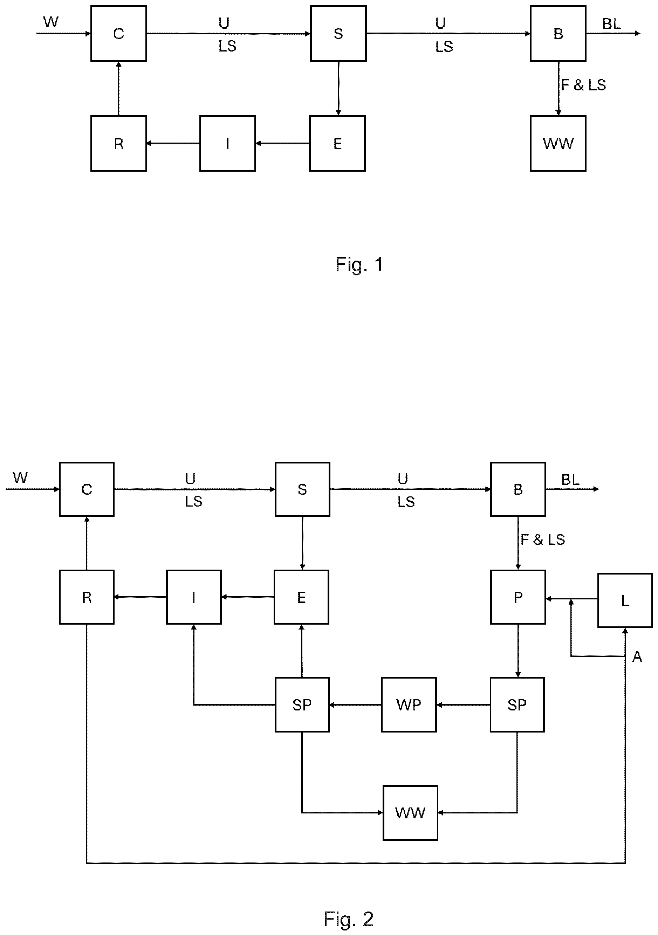

Zellstoffherstellung auf Basis von Magnesiumsulfit bzw. -bisulfit, die bei einem sauren pH-Wert abläuft, ist, wie in Fig. 1 gezeigt, als Kreislauf-Prozess ausgestaltet. HolzHackschnitzel W werden in saurer, wässriger Magnesiumsulfit bzw. -bisulfit-Lösung unter Einwirkung von Druck und Hitze gemäß Schritt C in Fig. 1 aufgeschlossen. Nach dem Aufschluss C schließt sich das Waschen und Sortieren S an, bei dem sich Zellstoff von der Kochablauge mit dem darin enthaltenen Lignosulfonat und den in wässriger Lösung befindlichen Aufschluss-Chemikalien trennen lässt. Die aufgefangene Kochablauge wird eingedampft E bis der Feststoffgehalt mehr als 50% erreicht (bezogen auf die bei 105 °C bis zur Gewichtskonstanz getrocknete Trockenmasse). Das Lignosulfonat hat einen Heizwert von ca. 6.000 kJ/kg bis 17.000 kJ/kg (wasserfrei). Das Verbrennen I des Lignosulfonats, das nach dem Eindampfen E folgt, trägt bzw. trägt bei zur Deckung des Energieverbrauchs des Aufschlusses C bei. Aus dem Verbrennungsprodukt der Verbrennung I werden zudem in der Rückgewinnung R die zum Aufschluss eingesetzten Chemikalien zurückgewonnen.

Der ungebleichte Zellstoff U, der durch das Waschen und Sortieren S gewonnen wurde, enthält noch signifikante Mengen an Lignosulfonat LS, das nicht ausgewaschen werden konnte. Die Menge an Lignosulfonat im Zellstoff liegt bei 6 g/kg bis 50 g/kg bezogen auf den bei 105 °C bis zur Gewichtskonstanz getrockneten Zellstoff. Um Zellstoff zu erhalten, der möglichst frei von Lignin bwz. Lignosulfonat ist, wird der Zellstoff gebleicht. Als erste Bleichstufe B nach dem Aufschluss C wird üblicherweise eine alkalische Extraktionsstufe mit Sauerstoff und Peroxid (EOP-Stufe) durchgeführt. Auch hier wird am Ende der EOP-Stufe B der gebleichte Zellstoff BP vom Abwasser oder Filtrat F getrennt. Das Abwasser F dieser EOP-Stufe ist alkalisch mit einem tpyischen pH-Wert von 9,5 bis 12. Es enthält im Wesentlichen Lignosulfonat, das in der EOP-Stufe aus dem Zellstoff herausgelöst wurde, Lignin- und Celluloseabbauprodukte, die durch Sauerstoff und Peroxid aus dem Zellstoff gelöst wurden sowie Natriumionen bzw. Natriumhydroxid. Somit handelt es sich bei der entstandenen Lösung um ein Vielstoffgemisch in wässriger, alkalischer Lösung. Der gebleichte Zellstoff BP wird ggf. weiterer Verarbeitung oder Bleiche zugeführt.

Das alkalische Abwasser F weist einen hohen Anteil an organischer Fracht auf, zeigt also einen hohen CSB-Wert. Soweit möglich, wird diese organische Fracht in der Abwasserbehandlung WW abgebaut. Es zeigt sich jedoch, dass die bekannten, biologischen Verfahren zum Behandeln von Abwasser einen großen Anteil der organischen Fracht nicht abbauen können. Dieser refraktäre Teil der organischen Fracht passiert die Abwasserbehandlung WW ohne Weiteres und verbleibt im Abwasser, das in den Vorfluter eingeleitet wird. Da bei Emissionsgrenzwerten unter anderem auch Obergrenzen für CSB-Frachten einzuhalten sind, stellt vereinzelt der refraktäre, also nicht biologisch abbaubare CSB des Lignosulfonats im Abwasser eine Beschränkung des Produktionsvolumens dar.

Fig. 2 zeigt die erfindungsgemäße Lösung durch das Verfahren zum Ausfällen von Lignosulfonat aus dem alkalischen Abwasser F, das einen pH-Wert von 9,5 bis 12 aufweist. Falls erforderlich kann der pH-Wert durch Zugabe von Lauge, z. B. Natriumhydroxid-Lösung, auf den gewünschten bzw. erforderlichen pH-Wert eingestellt werden. Dem alkalischen Abwasser F wird eine wässrige Lösung L einer wasserlöslichen, chlorfreien Magnesium-Verbindung zugesetzt, typisch Magnesiumsulfit bzw. - bisulfit oder Magnesiumacetat. Die Magnesium-Verbindung liegt vorteilhaft in gelöster Form in der wässrigen Lösung vor. Alternativ kann eine wässrige Lösung von Magnesiumhydroxid zugesetzt werden. Üblich ist die Zugabe von 50 g/m³ bis 1 kg/m³ der wasserlöslichen Magnesium-Verbindung zum alkalischen Abwasser F, bevorzugt von 100 g/m³ bis 700 g/m³. Die zugesetzte Menge der wasserlöslichen Magnesium-Verbindung kann in Abhängigkeit von der Lignosulfonat-Fracht dosiert werden. Die wässrige Magnesiumhydroxid-Lösung wird z. B. mittels einer statischen oder dynamischen Mischeinrichtung eingemischt. Beim Zugeben dieser wässrigen Lösung L zum alkalischen Abwasser F bildet sich, sofern nicht bereits Magnesiumhydroxid-Lösung zugegeben wird, in situ Magnesiumhydroxid, das mit dem im alkalischen Abwasser F enthaltenen Lignosulfonat ein Lignosulfonat-Produkt P bildet, das dann aus dem Abwasser F ausfällt. Das Abtrennen SP von Abwasser F und Lignosulfonat-Produkt P kann auf beliebige Weise erfolgen. Es kann ein Absetzbecken genutzt werden, das vom Abwasser in ca. 0,5 bis 3 Stunden passiert wird, es kann ein Dekanter oder eine Filtrationseinrichtung bzw. eine Zentrifuge genutzt werden oder andere, geeignete Trenneinrichtungen, insbesondere Fest-/Flüssig-Trenneinrichtungen. Das Lignosulfonat-Produkt P weist einen Gehalt an Magnesiumhydroxid von 10 Gew.-% bis 50 Gew.-% bezogen auf das Gesamtgewicht des Lignosulfonat-Produktes P auf, bevorzugt von 10 Gew.-% bis 30 Gew.-%.

Nach dem Abtrennen SP aus dem alkalischen Abwasser F weist das Produkt P aus Lignosulfonat und Magnesiumhydroxid einen Feststoff-Gehalt von 40% oder mehr, bevorzugt von über 60% auf. In dem Produkt P sind neben den vorgenannten Bestandteilen oft noch Verunreinigungen aus der Bleiche B enthalten. Wenn dies der Fall ist, dann können diese Verunreinigungen in einer Wäsche WP aus dem Produkt P ausgewaschen werden.

Das ggf. gewaschene Produkt P wird dann ggf. weiter getrocknet, um den Feststoffgehalt zu erhöhen und anschließend der Verbrennung zugeführt, bevorzugt in der Verbrennungseinrichtung I, in der, wie in Fig. 2 gezeigt, auch die eingedampfte Ablauge aus dem Zellstoffaufschluss verbrannt wird, alternativ in einer eigenen Verbrennungseinrichtung. Wiederum trägt das Lignosulfonat LS dank des hohen Heizwerts von ca. 6.000 kJ/kg bis 17.000 kJ/kg (wasserfrei) dazu bei, dass Prozessenergie oder Energie zur Verstromung bereitgestellt werden kann.

Aus dem Verbrennungsrückstand A, der während der Verbrennung durch Oxidation entstandenes Magnesiumoxid enthält, kann das Magnesiumoxid vorteilhaft zurückgewonnen bzw. genutzt werden, um erneut zur Bindung des Lignosulfonats LS eingesetzt zu werden. Auf diese Weise wird für den jeweils nächsten Zyklus des Abtrennens nur wenig zusätzliche Magnesium-Verbindung zur Bildung des Lignosulfonat-Produkts P benötigt.

Der Verbrennungsrückstand A bzw. das daraus gewonnene Magnesiumoxid wird vorteilhaft in eine wässrige, säurehaltige Flüssigkeit, wie z. B. Kochsäure oder Brüdenkondensat eingeleitet, worauf sich in wässriger Flüssigkeit L gelöste Magnesiumsalze bilden. Die Kochsäure enthält in der Regel schweflige Säure, so dass sich Magnesiumsulfit bzw. -bisulfit bildet. Brüdenkondensat der Zellstoffherstellung enthält in der Regel Essigsäure, so dass sich in wässriger Flüssigkeit L gelöstes Magnesiumacetat bildet. Es können aber auch andere organische Säuren enthalten sein, welche organische Magnesium-Verbindungen, insbesondere Salze bilden und somit geeignet sind, im Rahmen des erfindungsgemäßen Verfahrens Lignosulfonat binden. Dabei reicht es meist aus, einen Teilstrom der jeweiligen wässrigen, sauren Flüssigkeit abzuzweigen, mit dem ausreichend in wässriger Flüssigkeit L gelöstes Magnesiumsalz bereitgestellt werden kann, um durch Bildung des Lignosulfonat-Produkts P ein Maximum an Lignosulfonat LS aus dem alkalischen Abwasser F zu entfernen.

Ein Verfahren zum Ausfällen von Lignosulfonat aus einem alkalischen Abwasser F sieht nach einer alternativen, aber bevorzugten Ausführung vor, dass neben einer chlorfreien, in situ Magnesiumhydroxid bildenden Magnesium-Verbindung eine chlorfreie, bevorzugt wasserlösliche Ammonium-, Natrium-, Kalium- und/oder Calcium-Verbindung eingesetzt wird. Bevorzugt werden Salze dieser Verbindungen eingesetzt, insbesondere von Säuren, die im Prozess der Zellstoffherstellung verfügbar sind wie z. B. schweflige Säure oder Essigsäure. Wo möglich, können auch Oxide oder Hydroxide eingesetzt werden. Typische Einsatzmengen der Ammonium-, Natrium-, Kalium- und/oder Calciumverbindungen betragen 0,01 kg/m³ bis 10 kg/m³, vorteilhaft von 0,1 kg/m³ bis 6 kg/m³, bevorzugt von 0,05 kg/m³ bis 0,3 kg/m³, jeweils bezogen auf das Abwasservolumen. Die chlorfreie Ammonium-, Natrium-, Kalium- und/oder Calcium-Verbindung kann typisch in Mischung mit der Magnesium-Verbindung eingesetzt werden und dabei den gleichen, vorstehend beschriebenen Kreislauf von Zugabe zum alkalischen Abwasser F, Bildung des Lignosulfonat-Produkts P und Abtrennen SP, optionaler Wäsche WP, optionaler Eindampfung E und Verbrennung I sowie Zugabe des Verbrennungsprodukts A in eine wässrige, saure Flüssigkeit L durchlaufen. Es zeigt sich, dass bei einem kombinierten Einsatz von Magnesium- und Ammonium-, Natrium-, Kalium- und/oder Calciumverbindungen mehr Lignosulfonat durch Ausfällen aus dem alkalischen Abwasser abgetrennt werden kann. So kann die Ausbeute an Lignosulfonat-Produkt P bei Zugabe einer chlorfreien, Ammonium-, Natrium-, Kalium- und/oder Calcium-Verbindung auf mindestens 35%, bevorzugt mindestens 55%, insbesondere mindestens 95% gesteigert werden, jeweils bezogen auf den Gehalt des Lignosulfonats im alkalischen Abwasser. Die Ausbeute an ausgefälltem Lignosulfonat-Produkt P verbessert sich im Vergleich zum Einsatz einer wasserlöslichen, chlorfreien Magnesium-Verbindung allein durch ergänzende Zugabe einer chlorfreien, bevorzugt wasserlöslichen Ammonium-, Natrium-, Kalium- und/oder Calcium-Verbindung um mehr als 5%, vorteilhaft um mehr als 10% bezogen auf ein Abtrennen von Lignosulfonat allein unter Einsatz einer chlorfreien Magnesium-Verbindung.

Schließlich kann in einer besonders einfachen Ausführung des erfindungsgemäßen Verfahrens chlorfreies Magnesiumoxid als Feststoff in das alkalische Abwasser F gegeben werden. Das Magnesiumoxid wird vorteilhaft als feinteiliger Feststoff zugegeben, als Staub oder Pulver. In Kontakt mit dem alkalischen Abwasser F bilden sich auf der Oberfläche der Feststoff-Partikel in situ Magnesiumhydroxid-Ionen, die dann mit dem Lignosulfonat ein Produkt P bilden. Das Magnesiumoxid muss über einen Zeitraum von bevorzugt 2 Minuten bis 8 Stunden intensiv eingemischt, bevorzugt eingerührt werden, da der Feststoff sonst nicht in ausreichendem Maße mit dem Lignosulfonat in Kontakt kommt, um ein Produkt zu bilden. Typisch werden mindestens 1 kg/m³ bis 10 kg/m³ Magnesiumoxid, bevorzugt mindestens 3 kg/m³ bis 8 kg/m³ Magnesiumoxid zugegeben, jeweils bezogen auf die Menge des alkalischen Abwassers F.

Auch hier kann ein Kreislauf zur wiederholten Nutzung der Magnesium-Verbindung eingerichtet werden. Das Produkt P wird ausgefällt SP, ggf. gewaschen WP, optional der weiteren Eindampfung E und der Verbrennung I zugeführt. Anschließend wird das Verbrennungsprodukt A, ggf. nach einer Zerkleinerung, wieder dem alkalischen Abwasser F, das unerwünschte Mengen an Lignosulfonat enthält, zugeführt. Da Magnesiumoxid als Feststoff eingesetzt wird, sind bei dieser einfachen Ausführung des erfindungsgemäßen Verfahrens größere Mengen der Magnesium-Verbindung erforderlich als bei einem Verfahren, bei dem eine in Wasser gelöste Magnesium-Verbindung eingesetzt wird. Eingesetzt werden zwischen 1 kg/m³ des alkalischen Abwassers F und 10 kg/m³, vorteilhaft zwischen 3 kg/m³ und 8 kg/m³ des alkalischen Abwassers F. Die Optimierung der Einsatzmenge an MgO erfolgt in Abhängigkeit von dem Gehalt an Lignosulfonat LS im alkalischen Abwasser F.

**Bezugszeichenliste**

| | |
|---|---|
| W | Holzhackschnitzel |
| C | Aufschluss |
| S | Waschen und Sortieren |
| E | Eindampfen |
| I | Verbrennung |
| R | Rückgewinnung |
| Ü | ungebleichter Zellstoff |
| LS | Lignosulfonat |
| B | Bleiche |
| BL | gebleichter Zellstoff |
| F | alkalisches Abwasser |
| WW | Abwasserbehandlung |
| L | saure, wässrige Flüssigkeit mit Magnesiumsalz, ggf. auch Calciumsalz |
| P | Produkt |
| SP | Trennen von Produkt und Abwasser |
| WP | Waschen des Produkts |
| A | Verbrennungsrückstand |

## Patentansprüche

1. Verfahren zum Abtrennen von Lignosulfonat (LS) aus alkalischem Abwasser (F), aufweisend einen pH-Wert von 8 bis 14 mit den Schritten:
- Zugabe einer chlorfreien Magnesium-Verbindung, die in dem alkalischen Abwasser (F) in situ Magnesiumhydroxid bildet oder einer wässrigen, chlorfreien Lösung enthaltend Magnesiumhydroxid,
- Bilden eines Lignosulfonat-Produkts (P) durch Umsetzung mit Magnesiumhydroxid,
- Abtrennen des Lignosulfonat-Produkts (P) aus dem alkalischem Abwasser (F).

2. Verfahren nach Anspruch 1, **dadurch gekennzeichnet, dass** dem alkalischen Abwasser (F) Magnesiumoxid oder ein Magnesiumsalz, insbesondere Magnesiumacetat, Magnesiumsulfit oder Magnesiumbisulfit zugesetzt werden.

3. Verfahren nach Anspruch 1 oder 2, **dadurch gekennzeichnet, dass** dem alkalischen Abwasser (F) eine Ammonium-, Natrium-, Kalium- und/oder, insbesondere als Salz der Essigsäure oder der schwefligen Säure zugesetzt wird.

4. Verfahren nach Anspruch 3, **dadurch gekennzeichnet, dass** die Ammonium-, Natrium-, Kalium- und/oder Calciumverbindung in einer Menge von 0,01 kg/m³ bis 10 kg/m³, bezogen auf das zu behandelnde Abwasser eingesetzt wird.

5. Verfahren nach einem der vorstehenden Ansprüche, **dadurch gekennzeichnet, dass** das Trennen von Lignosulfonat-Produkt (P) und alkalischem Abwasser (F) durch Filtration, in einem Absetzbecken, einem Dekanter oder einer Zentrifuge erfolgt.

6. Verfahren nach einem der vorstehenden Ansprüche, **dadurch gekennzeichnet, dass** das Lignosulfonat-Produkt (P) einer Wäsche (WK) zugeführt wird, Verunreinigungen zu entfernen.

7. Verfahren nach einem der vorstehenden Ansprüche, **dadurch gekennzeichnet, dass** das Lignosulfonat-Produkt (P) einer Verbrennung (I) zugeführt wird.

8. Verfahren nach Anspruch 7, **dadurch gekennzeichnet, dass** aus einem Verbrennungsrückstand (A) mindestens eine Magnesiumverbindung, optional eine Schwefelverbindung zurückgewonnen wird.

9. Verfahren nach Anspruch 7, **dadurch gekennzeichnet, dass** die durch das Verbrennen (I) des Lignosulfonat-Produktes (P) gewonnene Energie als Prozessenergie oder zur Verstromung genutzt wird.

10. Verfahren nach Anspruch 8, **dadurch gekennzeichnet, dass** Magnesiumoxid aus einem Verbrennungsrückstand (A) zum Ausfällen von Lignosulfonat (LS) eingesetzt wird.

11. Verfahren nach Anspruch 8 oder 10, **dadurch gekennzeichnet, dass** Magnesiumoxid einer sauren Flüssigkeit zugesetzt wird, die bei der Zellstoffherstellung (C) anfällt, und dass die saure Flüssigkeit (L), enthaltend ein bevorzugt gelöstes Magnesiumsalz, dann eingesetzt wird, um Lignosulfonat (LS) durch Bildung eines Lignosulfonat-Produkts (P) aus einem alkalischen Abwasser (F) zu fällen.

12. Verfahren nach Anspruch 11, **dadurch gekennzeichnet, dass** Magnesiumoxid mit mindestens einem Teilstrom einer sauren Flüssigkeit, die Essigsäure aufweist, umgesetzt wird zu Magnesiumacetat, wobei das Magnesiumacetat dann zum Abtrennen von Lignosulfonat (LS) aus dem alkalischen Abwasser eingesetzt wird.

13. Verfahren nach Anspruch 11, **dadurch gekennzeichnet, dass** Magnesiumoxid mit mindestens einem Teilstrom einer sauren Flüssigkeit, die schweflige Säure aufweist, umgesetzt wird zu Magnesiumsulfit und/oder Magnesiumbisulfit, wobei das Magnesiumsulfit bzw. Magnesiumbisulfit dann zum Abtrennen von Lignosulfonat (LS) eingesetzt wird.

14. Verfahren nach Anspruch 7, **dadurch gekennzeichnet, dass** die Ammonium-, Natrium-, Kalium- und/oder Calciumverbindung einer sauren Flüssigkeit zugesetzt wird, die bei der Zellstoffherstellung (C) anfällt, und dass die saure, wässrige Flüssigkeit (L), enthaltend ein gelöstes Salz der Ammonium-, Natrium-, Kalium- und/oder Calciumverbindung, dann eingesetzt wird, um das Abtrennen von Lignosulfonat (LS) durch Bildung eines Lignosulfonat-Produkts (P) aus einem alkalischen Abwasser (F) zu verbessern.

15. Verfahren nach einem der Ansprüche 10 oder 14, **dadurch gekennzeichnet, dass** Magnesiumoxid und eine Ammonium-, Natrium-, Kalium- und/oder Calciumverbindung gemeinsam einer sauren Flüssigkeit zugesetzt werden, die bei der Zellstoffherstellung (C) anfällt.

## Geänderte Patentansprüche

### Geänderte Patentansprüche gemäss Regel 137(2) EPÜ.

1. Verfahren zum Abtrennen von Lignosulfonat (LS) aus alkalischem Abwasser (F), aufweisend einen pH-Wert von 8 bis 14 mit den Schritten:
- Zugabe einer chlorfreien Magnesium-Verbindung, die in dem alkalischen Abwasser (F) in situ Magnesiumhydroxid bildet oder einer wässrigen, chlorfreien Lösung enthaltend Magnesiumhydroxid, wobei das Abwasser bis zu 5 kg/m³ Lignosulfonat enthält,
- Bilden eines Lignosulfonat-Produkts (P) durch Umsetzung mit Magnesiumhydroxid,
- Abtrennen des Lignosulfonat-Produkts (P) aus dem alkalischem Abwasser (F).

2. Verfahren nach Anspruch 1, **dadurch gekennzeichnet, dass** dem alkalischen Abwasser (F) Magnesiumoxid oder ein Magnesiumsalz, insbesondere Magnesiumacetat, Magnesiumsulfit oder Magnesiumbisulfit zugesetzt werden.

3. Verfahren nach Anspruch 1 oder 2, **dadurch gekennzeichnet, dass** dem alkalischen Abwasser (F) eine Ammonium-, Natrium-, Kalium- und/oder Calciumverbindung, insbesondere als Salz der Essigsäure oder der schwefligen Säure, zugesetzt wird.

4. Verfahren nach Anspruch 3, **dadurch gekennzeichnet, dass** die Ammonium-, Natrium-, Kalium- und/oder Calciumverbindung in einer Menge von 0,01 kg/m³ bis 10 kg/m³, bezogen auf das zu behandelnde Abwasser eingesetzt wird.

5. Verfahren nach einem der vorstehenden Ansprüche, **dadurch gekennzeichnet, dass** das Trennen von Lignosulfonat-Produkt (P) und alkalischem Abwasser (F) durch Filtration, in einem Absetzbecken, einem Dekanter oder einer Zentrifuge erfolgt.

6. Verfahren nach einem der vorstehenden Ansprüche, **dadurch gekennzeichnet, dass** das Lignosulfonat-Produkt (P) einer Wäsche (WK) zugeführt wird, Verunreinigungen zu entfernen.

7. Verfahren nach einem der vorstehenden Ansprüche, **dadurch gekennzeichnet, dass** das Lignosulfonat-Produkt (P) einer Verbrennung (I) zugeführt wird.

8. Verfahren nach Anspruch 7, **dadurch gekennzeichnet, dass** aus einem Verbrennungsrückstand (A) mindestens eine Magnesiumverbindung, optional eine Schwefelverbindung zurückgewonnen wird.

9. Verfahren nach Anspruch 7, **dadurch gekennzeichnet, dass** die durch das Verbrennen (I) des Lignosulfonat-Produktes (P) gewonnene Energie als Prozessenergie oder zur Verstromung genutzt wird.

10. Verfahren nach Anspruch 8, **dadurch gekennzeichnet, dass** Magnesiumoxid aus einem Verbrennungsrückstand (A) zum Ausfällen von Lignosulfonat (LS) eingesetzt wird.

11. Verfahren nach Anspruch 8 oder 10, **dadurch gekennzeichnet, dass** Magnesiumoxid einer sauren Flüssigkeit zugesetzt wird, die bei der Zellstoffherstellung (C) anfällt, und dass die saure Flüssigkeit (L), enthaltend ein bevorzugt gelöstes Magnesiumsalz, dann eingesetzt wird, um Lignosulfonat (LS) durch Bildung eines Lignosulfonat-Produkts (P) aus einem alkalischen Abwasser (F) zu fällen.

12. Verfahren nach Anspruch 11, **dadurch gekennzeichnet, dass** Magnesiumoxid mit mindestens einem Teilstrom einer sauren Flüssigkeit, die Essigsäure aufweist, umgesetzt wird zu Magnesiumacetat, wobei das Magnesiumacetat dann zum Abtrennen von Lignosulfonat (LS) aus dem alkalischen Abwasser eingesetzt wird.

13. Verfahren nach Anspruch 11, **dadurch gekennzeichnet, dass** Magnesiumoxid mit mindestens einem Teilstrom einer sauren Flüssigkeit, die schweflige Säure aufweist, umgesetzt wird zu Magnesiumsulfit und/oder Magnesiumbisulfit, wobei das Magnesiumsulfit bzw. Magnesiumbisulfit dann zum Abtrennen von Lignosulfonat (LS) eingesetzt wird.

14. Verfahren nach Anspruch 7, **dadurch gekennzeichnet, dass** die Ammonium-, Natrium-, Kalium- und/oder Calciumverbindung einer sauren Flüssigkeit zugesetzt wird, die bei der Zellstoffherstellung (C) anfällt, und dass die saure, wässrige Flüssigkeit (L), enthaltend ein gelöstes Salz der Ammonium-, Natrium-, Kalium- und/oder Calciumverbindung, dann eingesetzt wird, um das Abtrennen von Lignosulfonat (LS) durch Bildung eines Lignosulfonat-Produkts (P) aus einem alkalischen Abwasser (F) zu verbessern.

15. Verfahren nach einem der Ansprüche 10 oder 14, **dadurch gekennzeichnet, dass** Magnesiumoxid und eine Ammonium-, Natrium-, Kalium- und/oder Calciumverbindung gemeinsam einer sauren Flüssigkeit zugesetzt werden, die bei der Zellstoffherstellung (C) anfällt.
